# EUROPEAN PATENT APPLICATION

(11) **EP 4 726 885 A2**
(43) Date of publication of application: **15.04.2026**
(21) Application number: 25207360.6
(22) Date of filing: 07.10.2025
(51) Int. Cl.: H01M 50/213, H01M 50/503, H01M 50/505, H01M 50/509, H01M 50/583, H01M 50/574, H01M 50/536, H01M 50/526

(54) **BUSBAR ASSEMBLY, METHOD OF MANUFACTURING A BUSBAR ASSEMBLY, AND A METHOD OF MANUFACTURING AN ELECTRICAL CELL MODULE**

(30) Priority: 14.10.2024 GB 202415058
(71) Applicant: Fortescue Zero Limited, Kidlington, England OX5 1GB (GB)
(72) Inventor: CROME, Andrew, Kidlington, OX5 1GB (GB); ASHDOWN, James, Kidlington, OX5 1GB (GB)
(74) Representative: HGF

(57) **Abstract**

The invention relates to a busbar assembly electrically connecting cells of an electrical cell module. The busbar assembly includes a first and second insulator sheets in parallel, and busbar elements laminated between. Each busbar element includes connector portions configured so that adjacent pairs are spaced apart by an intermediary busbar portion. Each connector portion connects in series positive cell terminal of a first cell to a negative cell terminal of a second cell. The intermediary busbar portions connect in parallel both positive cell terminals of first cells, and negative cell terminals of second cells. The busbar element is operably rated for a maximum fault current determined by aggregation of discharge currents of the negative cell terminals. Each intermediary busbar portion has a fusible portion to disconnect connector portions in response to a surge current of 20% to 50% of the maximum fault current. Methods of manufacturing are also disclosed.

## Description

### TECHNICAL FIELD

The present invention relates generally to electrical cell modules, and particularly to a busbar assembly for electrically connecting a series of cells of an electrical cell module. A method of manufacturing a busbar assembly as well as a method of manufacturing an electrical cell module including a busbar assembly are also disclosed.

### BACKGROUND

Energy storage systems, including electrical cell modules incorporating multiple individual cells, are used in a variety of applications. For example, energy storage systems are used in vehicles, such as electric vehicles. A basic unit of an electrical storage system is a cell, also known as a battery or a battery cell, which comes in several shapes. Cells are typically one of three common formats: pouch, prismatic or cylindrical, depending on the shape and characteristics of the cell housing. Individual cells have to be connected together using a busbar in order to build energy storage systems capable of storing and delivering more power than a single battery cell. A battery pack, or battery sub-pack is composed of electrical cell modules, each electrical cell module is composed of cells.

Each cell includes a pair of cell terminals, one each of a negative cell terminal and a positive cell terminal, to enable electrical energy either to discharged from the cells or to be stored within the cells. In certain known examples the cell terminals are accessible at the same cell end portion. For cylindrical cells, a first cell terminal is typically formed as a protuberance on a first end portion, and the second cell terminal, is typically the remaining external body of the cell, which includes an annular rim on the same end portion. The first cell terminal is arranged on the central longitudinal axis of the cylindrical battery. The second cell terminal is arranged concentrically with the central longitudinal axis, spaced apart from the first cell terminal. Where cell terminals are positioned at the same end portion, then the first cell terminal and second cell terminal are physically close to one another, presenting a challenge to electrically connect to the cell without causing a short circuit. Any connecting elements that contact the cell terminals must be positioned accurately to contact only one of the cell terminals. A further problem is that corresponding accuracy is required in order to weld or otherwise fix the connecting element to the cell terminal.

Known electrical cell modules include multiple cells enclosed within a housing, with each cell having both its negative cell terminal and positive cell terminal oriented to face upwards in the housing. It is a problem to reliably and accurately contact every cell terminal in order provide electrical connections for charging and discharging each cell. In particular, tolerances for the dimension of the cells mean that exact position of the cell terminals of a cell vary from an ideal coordinate in both height and lateral position.

Known busbar assemblies are used for interconnection of cells within an electrical cell module. Conductive busbar elements are mounted within an insulative support, for example a rigid frame, to enable all the cells to electrically connect in a desired configuration. By providing the busbar elements in a support, the busbar elements are fixed in position relative to cells and will only be reliably connected to cells that having dimensions within a certain tolerances.

Certain busbar assemblies for battery interconnection employ a laminated busbar assembly. In this way, conductive busbar elements form a layer that is enclosed between two layers of insulating material, such as insulator sheets. Again, the busbar elements are fixed in positions relative to the cells in the electrical cell module.

One or both of the insulator sheets includes a series of apertures to leave regions of the busbar element uncovered to permit each cell for contact and electrically connect with a busbar element. Manufacturing a laminated busbar assembly therefore requires accurate alignment of the apertures with the layer of busbar elements so that suitable regions of the busbar elements are uncovered while other regions are covered and insulated.

Furthermore, uncovered regions of every busbar element must accurately align with all corresponding cell terminals when the busbar assembly is fitted to the electrical cell module. Manufacture of the electrical cell module also requires means of reliably fixing busbar elements to both cell terminals of the cells. An additional problem is to fix the busbar elements to the cell terminals located below the layer of busbar elements.

Busbar assemblies connect groups of cells in series with one another. Busbar assemblies also electrically connect a number of cells in parallel, for example 10, 20 or more cells may be electrically connected in parallel. Cells are susceptible to damage or thermal runaway causing an electrical short circuit. A damaged cell will provide a potential short circuit pathway for the discharge current of all the cells electrically connected in parallel. An increased current through a region of a busbar element risks overheating the busbar assembly, causing damage to the busbar assembly and to other cells.

It is an aim of certain examples or embodiments of the present invention to solve, mitigate or obviate, at least partly, at least one of the problems and/or disadvantages associated with the prior art.

### BRIEF SUMMARY

The invention is set out in the appended claims.

According to an aspect of the invention, there is provided a busbar assembly for electrically connecting a series of cells of an electrical cell module, each cell including a positive cell terminal and a negative cell terminal at a common end portion of the cell, the busbar assembly including:
a first insulator sheet;
a second insulator sheet arranged in parallel to the first insulator sheet; and
at least one busbar element laminated between the first insulator sheet and the second insulator sheet, wherein the, or each, busbar element includes:
   a plurality of connector portions and at least one intermediary busbar portion, wherein the busbar element is configured so that each adjacent pair of connector portions of the plurality of connector portions are spaced apart from one another by an intermediary busbar portion,
   wherein each connector portion is configured to electrically connect in series a positive cell terminal of at least one first cell to a negative cell terminal of at least one second cell;
   wherein the intermediary busbar portions of each busbar element are configured to electrically connect in parallel each positive cell terminal of the at least one first cell, and to electrically connect in parallel each negative cell terminal of the at least one second cells;
   wherein the busbar element is operably rated for a maximum fault current determined by an aggregation of discharge currents operably provided by each of the negative cell terminals electrically connected to the busbar element; and
   wherein each intermediary busbar portion has a fusible portion that is configured to disconnect the adjacent pair of connector portions in response to a surge current through the corresponding intermediary busbar portion, and wherein the surge current is in a range of from 20% to 50% of the maximum fault current.

In this way, each busbar element is responsive to a short circuit, such as provided by a fault or defect in a cell, while also being tolerant of such an event so that unaffected cells remain operably connected within the electrical cell module. Stated differently, if a short circuit arises through a cell in contact with a certain connector portion, then the fusible portions ensure the connector portion is disconnected, that is electrically isolated, from the adjacent connector portions. The electrical pathways along other connector portions in the same busbar element are unaffected by the short circuit and / or by the disconnection. The risk of overheating caused by a surge current of cells electrically connected in parallel to a busbar element is significantly reduced.

By providing fusible portions configured to respond to a surge current in a range of from 20% to 50% of the maximum fault current, the fusible portions may tuned be according to the specification of the electrical cell module. Thus, the fusible portions may be adapted according to the nominal discharge currents of the cells, as well as the number of cells electrically connected in series or in parallel through a busbar element.

By providing fusible portions in each busbar element of the busbar assembly, any short circuit may be contained within cells directly along an axis in the longitudinal direction. Cells that are connected to other busbar elements and that do not lie along the longitudinal axis of the short circuit will remain operably connected. The electrical cell module continues to function despite the short circuit.

According to another aspect of the invention, there is provided a busbar assembly for electrically connecting cells of an electrical cell module including a group of first cells and a group of second cells including:
a first insulator sheet, including a first upper surface, an opposing first lower surface, and a plurality of sensor apertures through the first upper surface to the first lower surface;
a sensor layer, laminated to the first upper surface of the first insulator sheet, wherein the sensor layer includes a plurality of sensor contacts spaced apart from one another in a longitudinal direction;
a second insulator sheet, including a second upper surface and an opposing, second lower surface, wherein the second insulator sheet is arranged in parallel with the first insulator sheet;
at least two busbar elements, spaced apart from one another in the longitudinal direction, and laminated between the first lower surface of the first insulator sheet and the second upper surface of the second insulator sheet, wherein each busbar element includes:
   at least one connector portion configured so that, with the busbar assembly mounted to the electrical cell module so that the second insulator sheet is facing the cells of the electrical cell module, each connector portion of the at least one connector portion electrically connects in series at least one first cell to at least one second cell, and
   a mount region, disposed on an upper surface of each busbar element, wherein each mount region is arranged to be exposed through one of the plurality of sensor apertures through the first insulator sheet;
   wherein each sensor contact of the plurality of sensor contacts is configured to contact the mount region of a respective busbar element of the plurality of busbar elements through one of the sensor apertures of the first insulator sheet.

In this way, the sensor layer is also laminated within the busbar assembly, so that the whole structure is formed in a single manufacturing step. Furthermore, the sensor layer has sensor contacts provided in predetermined positions corresponding to mount regions on each of the busbar elements. This provides a quick and convenient means for an operator to correctly position a series of sensor contacts in contact with a plurality of the busbar elements. The risk of errors in positioning the sensor contacts is reduced.

When laminated together, the mount region is positioned to be exposed through one of the plurality of sensor apertures in the first insulator sheet in the busbar assembly. Each sensor contact is accessible through the first insulator sheet for welding to the corresponding mount region, for example by urging a welding tip against the sensor contact through the sensor aperture. The welding process time is significantly reduced. Also, the accuracy of the weld is increased due to the consistent alignment of the sensor contact with the mount region.

According to a further aspect of the invention, there is provided a method of manufacturing a laminated busbar assembly for electrically connecting cells of an electrical cell module, the method including:
providing a first insulator sheet, having a first upper surface and an opposing, first lower surface, and a second insulator sheet, having a second upper surface and an opposing, second lower surface;
providing a first adhesive layer on the first lower surface and a second adhesive layer on the second upper surface;
providing a series of busbar elements spaced apart from one another, each busbar element having at least one connector portion for contactingly engaging cells of an electrical cell module to electrically connect the cells in series, wherein each busbar element is circumscribed by an element perimeter;
arranging the first insulator sheet in a mould;
arranging the series of busbar elements in contact with the first adhesive layer of the first insulator sheet in the mould so that adjacent busbar elements are spaced apart with a minimum element spacing distance between the corresponding element perimeters of adjacent busbar elements, wherein the minimum element spacing distance is at least 2 millimetres;
arranging the second insulator sheet in the mould with the second adhesive layer in contact with the series of busbar elements, wherein the first insulator sheet, second insulator sheet and series of busbar elements are configured to delineate one or more interstitial spaces between the first adhesive layer, the second adhesive layer and the corresponding element perimeters of adjacent busbar elements;
clamping the mould and applying heat and pressure so that the series of busbar elements is laminated between the first insulator sheet and the second insulator sheet, and so that an adhesive material of one or both of the first adhesive layer and the second adhesive layer is urged into each interstitial space and forms an adhesive bond layer within each interstitial space.

In this way, the application of heat and pressure effectively mobilises the adhesive material and the method provides necessary space for it to bridge between the first adhesive layer and the second adhesive layer. The adhesive material more consistently surrounds the element perimeter of each busbar element, fixing each busbar element securely within the busbar assembly. The bond strength of the laminate structure is increased. A more resilient laminated busbar assembly is provided.

According to another aspect, there is provided a method of manufacturing an electrical cell module, including:
providing a housing and a plurality of cells in the housing;
providing a laminated busbar assembly including a laminated busbar assembly described here, wherein:
   each connector portion extends between a first terminal portion, having at least one first terminal element, and a second terminal portion, having at least one second terminal element;
   the first insulator sheet includes a first upper surface, an opposing, first lower surface, and a plurality of first terminal apertures through the first upper surface to the first lower surface;
   the second insulator sheet includes a second upper surface, an opposing, first lower surface, and a plurality of second terminal apertures through the second upper surface to the second lower surface;
   each first terminal aperture at least partly overlies second terminal aperture so as to form a plurality of through-openings from the first upper surface to the second lower surface; and
   wherein each first terminal element of the plurality of connector portions is disposed within a through-opening;
   mounting the second lower surface of the laminated busbar assembly to the cells in the housing;
   mounting a jig assembly including a series of projecting pins to the first upper surface; and
   urging a first sub-series of the series of projecting pins against the first terminal elements to deform each first terminal element through the respective through-opening to abut a respective cell terminal of one the cells of the electrical cell module.

In this way, the jig assembly deforms each first terminal element from an undeformed configuration, to a deformed configuration. In the deformed configuration, each of the first terminal elements is contactingly engaged with a first cell terminal below the first plane of the laminated busbar assembly. The corresponding connector portion is electrically connected to one or more first cell terminals. The process of connecting each terminal element to a cell terminal is faster, reducing manufacturing time of the electrical cell module

Furthermore, the projecting pins deform each first terminal element according to the vertical distance to the corresponding first cell terminal. All the first terminal elements make contact with cell terminals having tolerances in the vertical height of the cell terminals. The risk of manufacturing defects, typically through failure of terminal elements to contact cell terminals, is reduced.

As will be appreciated, the features or components on any disclosed aspect may be readily combined with any other disclosed aspect. The features of each busbar assembly of any aspect may be suitable for use in any other busbar assembly. For example, a busbar assembly may include certain aspects of a fusible portion or of a sensor layer, or may include aspects of both a fusible portion and a sensor layer. The disclosed methods of manufacturing a busbar assembly are suitable for manufacturing any of the disclosed busbar assemblies other than any that are mutually not compatible. Any of the disclosed busbar assemblies are suitable for the disclosed methods of manufacturing an electrical cell module.

The busbar assembly may be disposed in parallel to a first plane, wherein the first plane extends in a longitudinal direction, and in a transverse direction, also in the first plane and perpendicular to the longitudinal direction. Each connector portion may extend in the longitudinal direction between a first terminal portion electrically connected to the positive cell terminal of at least one first cell, and a second terminal portion electrically connected to the negative cell terminal of at least one second cell.

Each connector portion may include a body portion disposed, in the longitudinal direction, between the first terminal portion and the second terminal portion. The, or each, intermediary busbar portion may adjoin the body portion of the associated connector portions.

The, or each, fusible portion may have a cross-sectional area. The cross-sectional area may be in a range of from 0.1 millimetres squared to 0.6 millimetres squared. The cross-sectional area may be in a range of from 0.2 millimetres squared to 0.4 millimetres squared. The cross-sectional area may be 0.1 millimetres squared. The cross-sectional area may be 0.2 millimetres squared. The cross-sectional area may be 0.3 millimetres squared. The cross-sectional area may be 0.4 millimetres squared. The cross-sectional area may be 0.5 millimetres squared. The cross-sectional area may be 0.6 millimetres squared.

In this way, the fusible portion may be adapted according to the configuration of the cells within the electrical cell module, and the number of cells connected electrically in parallel through the respective busbar element. Furthermore, the fusible portion may be configured according to the material from which it is formed, and its heating profile in response to electrical current. The fusible portion may be adaptable to a range or materials, including metals such as copper, or nickel-plated copper.

Each of the second terminal portions may have at least one second terminal element contactingly engaged below the first plane with a cell terminal of a first cell. The cell terminal may be a negative cell terminal. The negative cell terminal may be at a perimeter of the cell end portion, example as an annular rim or an arcuate rim.

The second insulator sheet may include:
a second upper surface laminated to the at least one busbar element;
a second lower surface disposed, in use, towards the cells of the electrical cell module; and
a plurality of second terminal apertures through the second upper surface to the second lower surface.

Each of the second terminal portions may include a neck configured to project through a respective second terminal aperture from the connector portion to the negative cell terminal. Each of the first terminal portions may include a neck configured to project through a respective second terminal aperture from the connector portion to the positive cell terminal.

The neck of a terminal portion may be a bifurcated neck. The bifurcated neck may be a bifurcated neck of a second terminal portion. The neck may be configured to project from the connector portion to a pair of second terminal elements arranged to electrically connect to a pair of negative cell terminals. The bifurcated neck allows a terminal portion to contact cell terminals of adjacent cells. In particular, the cells may be positioned close together, increasing the packing density of cells within the electrical cell module.

The neck of a terminal portion may include an elongate slot. The neck with an elongate slot may extend from the first terminal portion to the respective first terminal element. The neck may be configured to project from the connector portion to a first terminal element to electrically connect to a positive cell terminal.

The neck includes a constricted region in which the width is reduced, to allow deformation of the neck. In an example, the width of the neck may be 6 millimetres and the width of the constricted region may be 5 millimetres.

In these ways, the neck may be adapted to ensure the terminal portion is deformable through a terminal aperture. The neck is configured to control the lateral position at which the terminal portion is deformed to project through a terminal aperture. This ensures the surface on the terminal element available for welding the terminal element to a cell terminal, which remains undeformed, is maximised.

The, or each, second terminal portion may include one or both of: a series of second terminal elements spaced apart in the longitudinal direction; or a series of second terminal elements spaced apart in the transverse direction.

The, or each, of the first terminal portions may have at least one first terminal element contactingly engaged below the first plane with a cell terminal of a second cell. The at least one first terminal element may be contactingly engaged below the first plane with a positive cell terminal of a second cell.

The, or each, first terminal portion of a connector portion may contactingly engaged with a cell terminal below the first plane in combination with the, or each second terminal portion of the connector portion contactingly engaged with another cell terminal below the first plane. Alternatively, only the, or each, first terminal portion of a connector portion may contactingly engaged with a cell terminal below the first plane. Alternatively, only the, or each second terminal portion of the connector portion contactingly engaged with a cell terminal below the first plane.

Each first terminal portion may include one or both of: a series of first terminal elements spaced apart in the longitudinal direction; or a series of first terminal elements spaced apart in the transverse direction.

The busbar assembly may include a plurality of busbar elements, spaced apart in the longitudinal direction.

The connector portions of an adjacent pair of busbar elements may be configured to electrically connect to the respective opposing cell terminals of a group of common cells so as to provide an electrical pathway between the adjacent pair of busbar elements through the group of common cells.

The connector portions of a first busbar element of each adjacent pair of busbar elements may be interdigitated in the transverse direction with the connector portions of a second busbar element of each adjacent pair of busbar elements.

The first terminal elements of a first busbar element of each adjacent pair of busbar elements may be interdigitated in the longitudinal direction with the second terminal elements of a second busbar element of each adjacent pair of busbar elements.

By arranging the terminal elements in an interdigitated fashion, the cells may be positioned close together while providing electrical pathways across each connector portion. Space between cells is reduced so that the packing density of cells within the electrical cell module is optimised.

The plurality of busbar elements may include a pair of outer busbar elements arranged, in a longitudinal direction, at opposing ends of the plurality of busbar elements. Each outer busbar element of the pair of outer busbar elements electrically may be connected to a module terminal.

One, or both, outer busbar elements may be configured to engage a housing of the electrical cell module. In an example the, or each, outer busbar element and the housing include mutually compatible fasteners to fix the, or each, outer busbar element to the housing.

The busbar assembly may include a sensor layer having a plurality of sensor contacts. Each sensor contact of the plurality of sensor contacts may be electrically connected to a data port via to a corresponding wire element. The data port may be mounted to an outer busbar element of the series of busbar elements.

Each wire element on the sensor layer may be aligned in parallel in the longitudinal direction. Each wire element may be spaced apart from its adjacent wire elements by a wire spacing distance, and wherein the wire spacing distance is dependent upon a fault current of the busbar element to which the sensor contacts.

Each connector portion of a busbar element may include a body portion disposed, in the longitudinal direction, between the first terminal portion and the second terminal portion. The connector portion may also include a mount region, wherein each mount region is provided on an intermediary busbar portion adjoined to the body portion.

At least one sensor adhesive layer may be provided between a sensor layer and the first insulator sheet. At least one sensor adhesive layer may be provided between a sensor layer and the second insulator sheet. At least one sensor adhesive layer may be provided between a sensor layer and each of the first insulator sheet and the second insulator sheet.

Each of a series of busbar elements may include a plurality of connector portions spaced apart from one in a transverse direction. Each of the series of busbar elements are spaced apart from one another in a longitudinal direction, perpendicular to the transverse direction.

A minimum element spacing distance may be in a range of from 2 millimetres to 4 millimetres. A minimum element spacing distance may be in a range of from 2 millimetres to 3 millimetres. A minimum element spacing distance may be 2 millimetres. A minimum element spacing distance may be 3 millimetres. A minimum element spacing distance may be millimetres.

In a laminated busbar assembly, an adhesive bond layer may surround each element perimeter.

A method of manufacturing may include the further steps of:
providing a sensor layer including a plurality of sensor contacts spaced apart from one another in a longitudinal direction;
providing a mount region on an upper surface of each busbar element, wherein each mount region is arranged to be exposed through one of a plurality of sensor apertures through the first insulator sheet; and
welding each sensor contact of the plurality of sensor contacts to a respective busbar element of the series of busbar elements.

A method may include, during a step of clamping a mould and applying heat and pressure so that the series of busbar elements is laminated between the first insulator sheet and the second insulator sheet, also laminating a sensor layer to the first upper surface of the first insulator sheet.

A method that includes the steps of arranging the first insulator sheet, the busbar elements and the second insulator sheet in the mould, may also include:
a first insulator sheet including a plurality of first locating apertures through the first upper surface to the first lower surface;
a second insulator sheet includes a plurality of second locating apertures through the second upper surface to the second lower surface; and
each busbar element includes at least one third locating aperture.

The method may further include using a series of dowels within the mould to align each third locating aperture between one of the first locating apertures and one of the second locating apertures.

A method of manufacturing may further include a step of using a first sub-series of projecting pins to weld the first terminal elements of the plurality of connector portions to the respective cell terminal. In this way, the jig assembly further decreases manufacturing time.

A method may include a connector portion in which each second terminal element of the plurality of connector portions is disposed within one of the through-openings. The method may include a further step of: urging a second sub-series of the series of projecting pins against the second terminal elements to abut a respective opposing cell terminal of one of the cells of the electrical cell module.

A method may further include a step of urging the second sub-series of projecting pins against the second terminal elements also deforms each second terminal element through the respective through-opening.

A method may further include a step of using the second sub-series of projecting pins to weld the second terminal elements to the respective opposing cell terminal.

In these ways, the jig assembly may be used to ensure both the first terminal elements and the second terminal elements contact the respective cell terminals. Accuracy and speed of manufacturing is further increased. Accuracy and speed of securing the terminal elements to the cell terminals is further increased.

A method may include:
a first insulator sheet including a plurality of first locating apertures through the first upper surface to the first lower surface;
a second insulator sheet including a plurality of second locating apertures through the second upper surface to the second lower surface; and
busbar elements, wherein each busbar element includes at least one third locating aperture, wherein each third locating aperture is aligned between one of the first locating apertures and one of the second locating apertures, so as to provide a plurality of locating-openings from the first upper surface to the second lower surface.

The method may further include a step of mounting the second lower surface of the laminated busbar assembly to the cells in the housing, includes inserting a series of dowels fixedly associated the cells through the at least some of locating-openings.

In these ways, alignment of the busbar assembly with cells of the electrical cell module is improved. The risk of errors in electrically connecting the cells using the busbar assembly is reduced.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

Examples will now be described further with reference to the figures in which:
FIG. 1A shows an exploded perspective view of an example busbar assembly;
FIG. 1B shows a perspective view of the example busbar assembly of FIG. 1A with the busbar elements laminated between the insulator sheets;
FIG. 1C shows a magnified perspective view of a portion of FIG. 1B;
FIG. 2 shows a top view of a series of busbar elements of the busbar assembly of FIG. 1A to FIG. 1C;
FIG. 3 shows a top view of a portion of a busbar element of the busbar assembly of FIG. 2;
FIG. 4A shows a magnified perspective view, FIG. 4B shows a first magnified side view, and FIG. 4C shows a second magnified side view, of the busbar element of FIG. 3 after mounting to cells of an electrical cell module;
FIG. 5 shows a top view of terminal elements of the busbar assembly of FIG. 4A to FIG. 4C mounted to the cell terminals of a cylindrical cell;
FIG. 6 shows the busbar element of FIG. 3 aligned with a frame associated with cells of an electrical cell module;
FIG. 7 shows a schematic flow diagram of an example method of manufacturing a busbar assembly;
FIG. 8 shows a schematic flow diagram of an example method of manufacturing an electrical cell module;
FIG. 9 shows a schematic cross-sectional view of one busbar element within the busbar assembly of FIG. 1A;
FIG. 10 shows a schematic cross-sectional view of one busbar element and the sensor layer within the busbar assembly of FIG. 11A to FIG. 13;
FIG. 11A shows an exploded perspective view of another example busbar assembly including a sensor layer;
FIG. 11B shows a top view of the example busbar assembly of FIG. 11A with the busbar elements laminated between the insulator sheets;
FIG. 11C shows a magnified perspective view of a portion of FIG. 11B;
FIG. 12 shows a top view of the sensor layer of the busbar assembly of FIG. 11A; and
FIG. 13 shows a magnified top view of a portion of the sensor layer of FIG. 12 within the busbar assembly of FIG. 11A.

### DETAILED DESCRIPTION

Certain terminology is used in the following description for convenience only and is not limiting. The words 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, as used herein, the term "electrically connected' is intended to include electrical connections formed by direct contact between two members without any other members interposed therebetween, as well as, indirect contact between members in which one or more other electrically-conductive members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

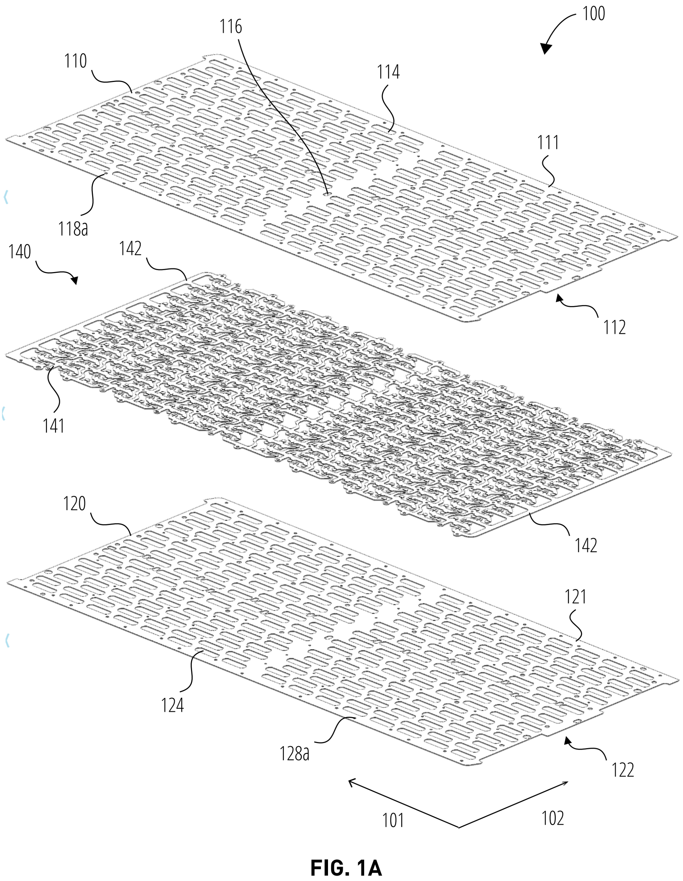

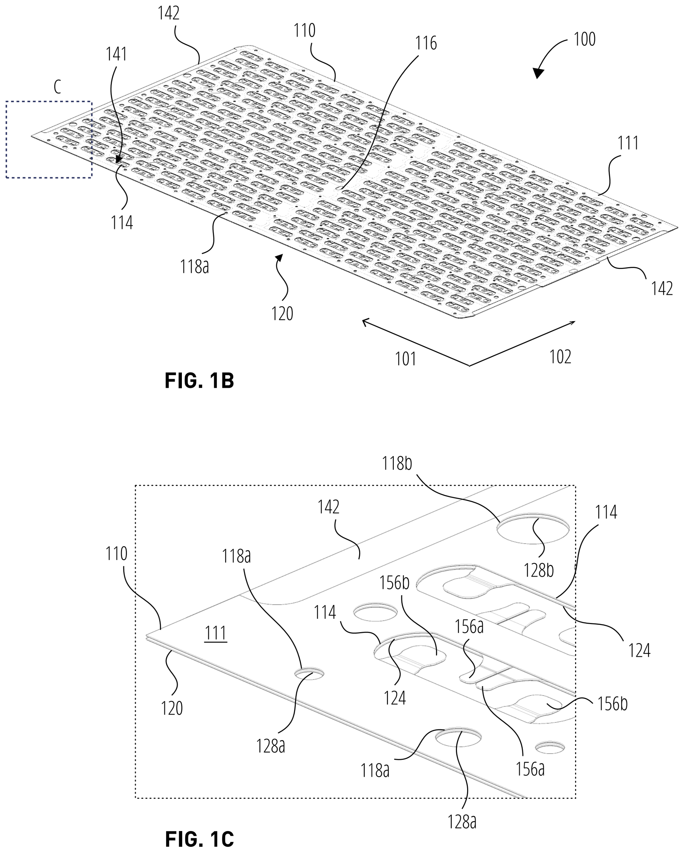

Referring now to FIG. 1A to FIG. 6, there is shown an example busbar assembly 100 according to an aspect of the invention, for electrically connecting a series of cells of an electrical cell module in which each cell has a positive cell terminal and a negative cell terminal at a common end portion of the cell. The busbar assembly 100 in the example is a laminated busbar assembly, shown in its laminated configuration particularly in FIG. 1B.

The busbar assembly 100 includes a first insulator sheet 110, a second insulator sheet 120 arranged in parallel to the first insulator sheet 110, and a series of busbar elements 140 laminated between the first insulator sheet 110 and the second insulator sheet 120. The first insulator sheet 110, second insulator sheet 120 and series of busbar elements 140 are shown in an exploded view, that is prior to lamination, particularly in FIG. 1A. Each busbar element 141 of the series of busbar elements 140 includes a plurality of connector portions 150 and intermediary busbar portions 160, arranged so that each adjacent pair of connector portions 150 are spaced apart from one another by a respective intermediary busbar portion 160. Each connector portion 150 is configured to electrically connect in series a positive cell terminal 192b of at least one first cell 190 to a negative cell terminal 192a of at least one second cell 190.

The intermediary busbar portions 160 of each busbar element 141 are configured to electrically connect in parallel each positive cell terminal 192b of the at least one first cells 190, and to electrically connect in parallel each negative cell terminal 192a of the at least one second cells 190. The busbar element 141 is operably rated for a maximum fault current determined by an aggregation of discharge currents operably provided by each of the negative cell terminals 192a electrically connected to the busbar element 141. Each intermediary busbar portion 160 has a fusible portion 162 that is configured to disconnect the adjacent pair of connector portions 150 in response to a surge current through the corresponding intermediary busbar portion 160, wherein the surge current is in a range of from 20% to 50% of the maximum fault current.

The busbar assembly 100 is disposed parallel to a first plane, wherein the first plane extends in a longitudinal direction 101, and a transverse direction 102 perpendicular to the longitudinal direction 101.

The first insulator sheet 110 extends parallel to the first plane. The first insulator sheet 110 includes a first upper surface 111 and an opposing first lower surface 112. When the busbar assembly 100 is mounted to an electrical cell module for use, the first upper surface 111 faces away from the cells in the electrical cell module.

The second insulator sheet 120 extends parallel to the first plane, and includes a second upper surface 121 and an opposing second lower surface 122. When the busbar assembly 100 is mounted to an electrical cell module for use, the second lower surface 122 of the second insulator sheet 120 faces towards the cells 190 of the electrical cell module.

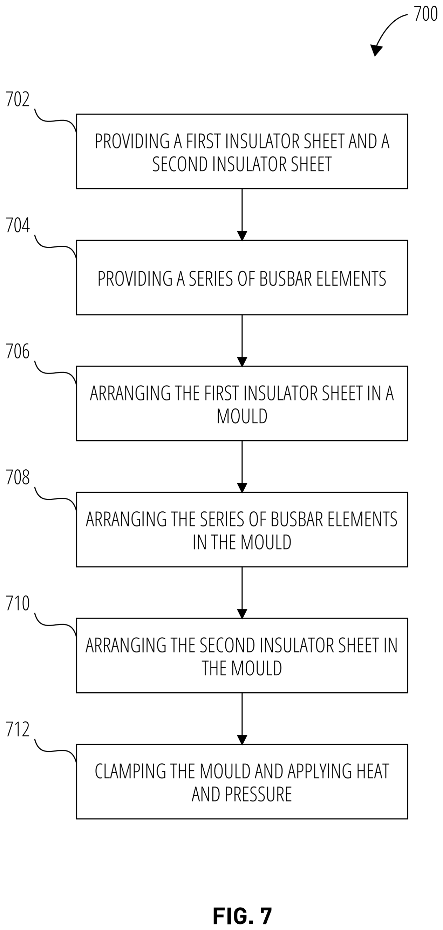

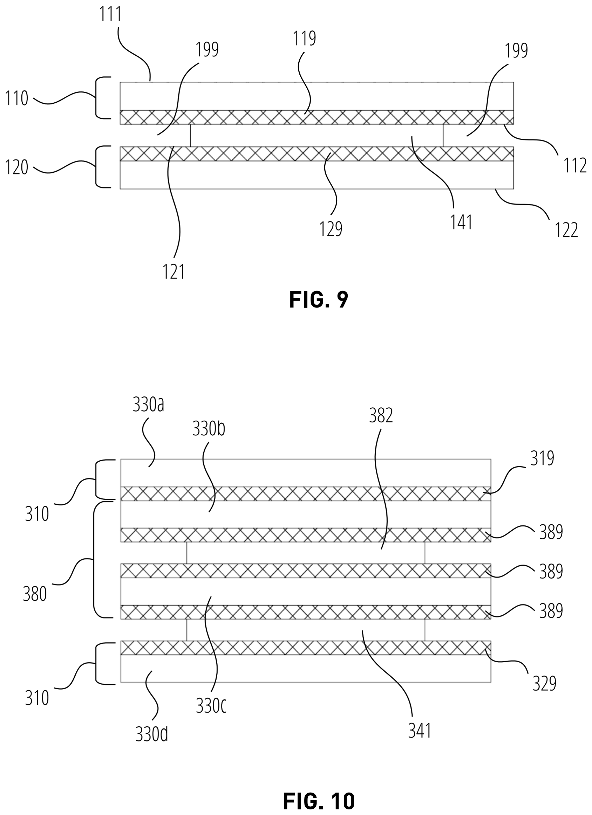

The first insulator sheet 110 is provided with an adhesive layer 119 on its first lower surface 112. The second insulator sheet 120 is provided with an adhesive layer 129 on its second upper surface 121. In this way, and as shown particularly in FIG. 9, the first insulator sheet 110 and second insulator sheet 120 may form a laminated arrangement around each busbar element 141 of the series of busbar elements 140, further details of which are described below with reference to FIG. 7.

The first insulator sheet 110 includes a number of apertures, shown particularly with reference to FIG. 1C. The apertures are configured according to the purpose of the aperture in the busbar assembly 100. That is, the apertures are configured by location on the first insulator sheet 110 to cooperate with corresponding features on the busbar elements 141 and / or on the second insulator sheet 120.

The first second insulator sheet 120 also includes a number of apertures, again shown particularly with reference to FIG. 1C. The apertures are configured according to the purpose of the aperture in the busbar assembly 100. That is, the apertures are configured by location on the second insulator sheet 120 to cooperate with corresponding features on the busbar elements 141 and / or on the first insulator sheet 110.

Certain apertures in the first insulator sheet 110 and the second insulator sheet 120 are configured to align with one another when the first insulator sheet 110 and second insulator sheet 120 are laminated to the series of busbar elements 140 to form the busbar assembly 100.

The first insulator sheet 110 includes a plurality of terminal apertures 114. Each terminal aperture 114 is formed as an elongate opening through the first insulator sheet 110, from the first upper surface 111 to the first lower surface 112. The terminal apertures 114 are distributed in the longitudinal direction 101 and in the transverse direction 102 across the first insulator sheet 110. In the busbar assembly 100 the first insulator sheet 110 is configured so that each terminal aperture 114 exposes a pair of terminal portions 152a, 152b of adjacent busbar elements 141. In particular, each terminal aperture 114 exposes an upper surface of each terminal portion 152a, 152b.

The second insulator sheet 120 includes a plurality of terminal apertures 124. Each terminal aperture 124 is formed as an elongate opening through the second insulator sheet 120, from the second upper surface 121 to the second lower surface 122. The terminal apertures 124 are distributed in the longitudinal direction 101 and in the transverse direction 102 across the second insulator sheet 120. In the busbar assembly 100 the second insulator sheet 120 is configured so that each terminal aperture 124 exposes a pair of terminal portions 152a, 152b of adjacent busbar elements 141. In particular, each terminal aperture 124 exposes a lower surface of each terminal portion 152a, 152b.

In the busbar assembly 100 each terminal aperture 114 of the first insulator sheet 110 aligns with a corresponding terminal aperture 124 of the second insulator sheet 120. In this way, each pair of terminal apertures 114, 124 form a combined aperture through the laminated busbar assembly. In addition, the corresponding pair of terminal apertures 114, 124 is configured so that, when the busbar assembly 100 is mounted to the electrical cell module, each pair of terminal apertures 114, 124 exposes the cell terminals 192a, 192b of a pair of cells 190 adjacent to one another in the longitudinal direction 101. The cell terminals 192a, 192b are thereby aligned with the terminal portion terminal portions 152a, 152b of adjacent busbar elements 141 within the combined aperture formed by the pair of terminal apertures 114, 124.

The first insulator sheet 110 includes a plurality of locating aperture 118a, 118b. Each locating aperture 118a, 118b is formed as an opening through the first insulator sheet 110, from the first upper surface 111 to the first lower surface 112. The locating apertures 118a, 118b are distributed in the longitudinal direction 101 and the transverse direction 102 across the first insulator sheet 110. The locating apertures 118a, 118b include a first proportion of locating apertures 118a and a second proportion of locating apertures 118b.

The second insulator sheet 120 includes a plurality of locating apertures 128a, 128b. Each locating aperture 128a, 128b is formed as an opening through the second insulator sheet 120, from the first second upper surface 121 to the first second lower surface 122. The locating apertures 128a, 128b are distributed in the longitudinal direction 101 and the transverse direction 102 across the second insulator sheet 120. The locating apertures 128a, 128b include a first proportion of locating apertures 128a and a second proportion of locating apertures 128b.

In the busbar assembly 100 each of the first proportion of locating apertures 118a of the first insulator sheet 110 aligns with a corresponding locating aperture of the first proportions of locating aperture locating apertures 128a of the second insulator sheet 120. The aligned first proportion of locating apertures 118a, 128a are configured to receiving one or more locating dowels during manufacture of the laminated busbar assembly 100, as is described in more detail below.

In the busbar assembly 100 each of the second proportion of locating apertures 118b of the first insulator sheet 110 aligns with a corresponding locating aperture of the second proportion of locating apertures 128b of the second insulator sheet 120. The aligned second proportions of locating apertures 118b, 128b are configured to receiving one or more locating dowels during manufacture of the electrical cell module, as is described in more detail below. This improves alignment of the busbar assembly 100 with the cells of the electrical cell module during assembly of the electrical cell module.

The first insulator sheet 110 includes a plurality of sensor aperture 116. Each sensor aperture 116 is formed as an opening through the first insulator sheet 110, from the first upper surface 111 to the first lower surface 112. The sensor aperture 116 are distributed in the longitudinal direction 101 along the first insulator sheet 110. The sensor apertures 116 are configured so that each exposes a region of a respective, that is a unique, busbar element 141 for optional mounting of a sensor contact to the busbar element 141.

As will be appreciated in other examples within the scope of the invention, any, some, or none of the sensor apertures or locating apertures may be provided in the respective insulator sheets, depending on the requirement for a busbar assembly to locate with other components during manufacturing.

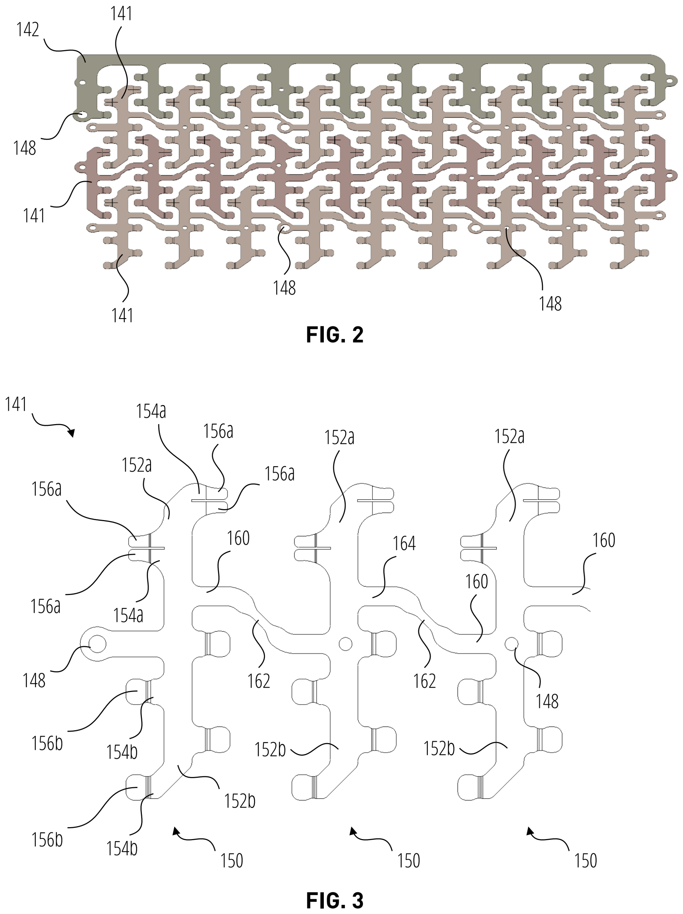

Referring now to FIG. 2 and FIG. 3, aspects of the series of busbar elements 140 are described in more detail. The busbar assembly 100 includes a series of busbar elements 140 laminated between the first insulator sheet 110 and the second insulator sheet 120.

The series of busbar elements 140 includes a plurality of busbar elements 141 spaced apart in the longitudinal direction 101. Each busbar element 141 includes a plurality of connector portions 150 and intermediary busbar portions 160, arranged so that each adjacent pair of connector portions 150 are spaced apart from one another by a respective intermediary busbar portion 160. The connector portions 150 and intermediary busbar portions 160 of each busbar element 141 alternate in the transverse direction 102.

Each connector portion 150 includes a body portion disposed, in the longitudinal direction 101, between the first terminal portion 152a and the second terminal portion 152b. Each intermediary busbar portion 160 adjoins the body portion of the associated connector portions 150 so that the fusible portion 162 is arranged equidistant from the associated connector portions 150.

Each intermediary busbar portion 160 includes a fusible portion 162. In the example shown, each fusible portion 162 has a cross-sectional area of 0.2 mm².

Each of the first terminal portions 152a includes a series of first terminal elements 156a. The first terminal elements 156a are each connected to the first terminal portion 152a via a corresponding neck 154a. In the example, the neck 154a is a bifurcated neck, configured to connected a pair of first terminal elements 156a to the first terminal portion 152a.

The series of first terminal elements 156a are arranged around the first terminal portion 152a. In the example, the first terminal elements 156a are spaced apart both in the longitudinal direction 101 and in the transverse direction 102. In this way, the first terminal elements 156a form a quadrilateral arrangement around the first terminal portion 152a. Each first terminal portion 152a is configured to contact the cell terminals of four cells of the electrical cell module. In particular, each first terminal portion 152a is configured to contact four cell terminals of the same polarity. Each first terminal portion 152a is configured to electrically connect four cells in parallel.

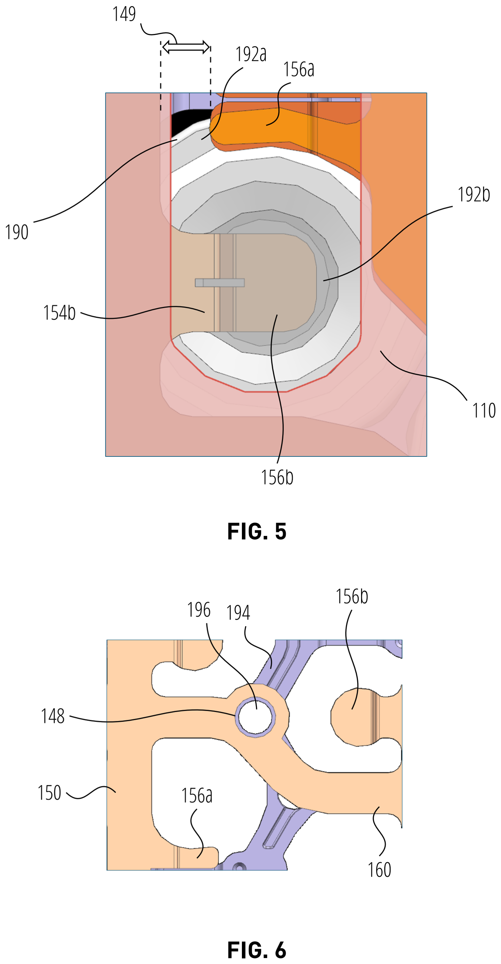

Each of the second terminal portions 152b includes a series of terminal elements 156b. The terminal elements 156b are each connected to the terminal portion 152b via a corresponding neck 154b. In the example, each neck 154b connects one terminal element 156b to the terminal portion 152b. Each neck 154b includes an elongate slot 157 through the neck 154b, as shown in FIG. 5.

The series of second terminal elements 156b are arranged around the second terminal portion 152b. In the example, the second terminal element terminal elements 156b are spaced apart both in the longitudinal direction 101 and in the transverse direction 102. In this way, the second terminal elements 156b form a quadrilateral arrangement around the second terminal portion 152b. Each second terminal portion 152b is configured to contact the cell terminals of four cells of the electrical cell module. In particular, each second terminal portion 152b is configured to contact four cell terminals of the same polarity. Each second terminal portion 152b is configured to electrically connect four cells in parallel.

Each second terminal portion 152b is configured to contact cell terminals of the opposing polarity to the cell terminals contacted by each first terminal portion 152a. In the example, the first terminal portions 152a negative cell terminals and the second terminal portions 152b contact positive cell terminals.

The connector portions 150 of adjacent pairs of busbar elements 141 are interdigitated, in the transverse direction 102, with one another. Each connector portion 150 is oriented so that its first terminal portions 152a are spaced apart from its second terminal portions 152b in the same direction. In this way, with the connector portions 150 of adjacent pairs of busbar element 141 interdigitated, the first terminal portions 152a of a first busbar element 141 contact the negative cell terminals of each of the cells while the second terminal portions 152b of the adjacent, second busbar element 141 contact the positive cell terminals of the same cells. An electrical pathway may be formed between the adjacent pair of busbar elements 141 through a set of common cells. Each busbar element 141 is electrically connected in parallel to an adjacent busbar element 141 through the set of common cells.

In addition, in the example, the first terminal elements 156a of a first busbar element 141 are interdigitated in the longitudinal direction 101 with the second terminal elements 156b of the adjacent busbar element 141. In this way, the busbar element 141 of the series of busbar elements 140 may be connected to cells in a space-efficient manner. In particular, as the first terminal elements 156a are connected to a common first terminal portion 152a by a bifurcated neck 154a then the space between these first terminal elements 156a is minimised, allowing for close spacing of the cells in the longitudinal direction 101.

Each busbar element 141 of the series of busbar elements 140 is formed as a substantially planar element. Typically, each busbar element 141 is cut from a sheet of conductor material, such as a metal sheet. In the example, each busbar element 141 is formed of 0.2 millimetre-thick copper sheet with a sulfamate nickel plating.

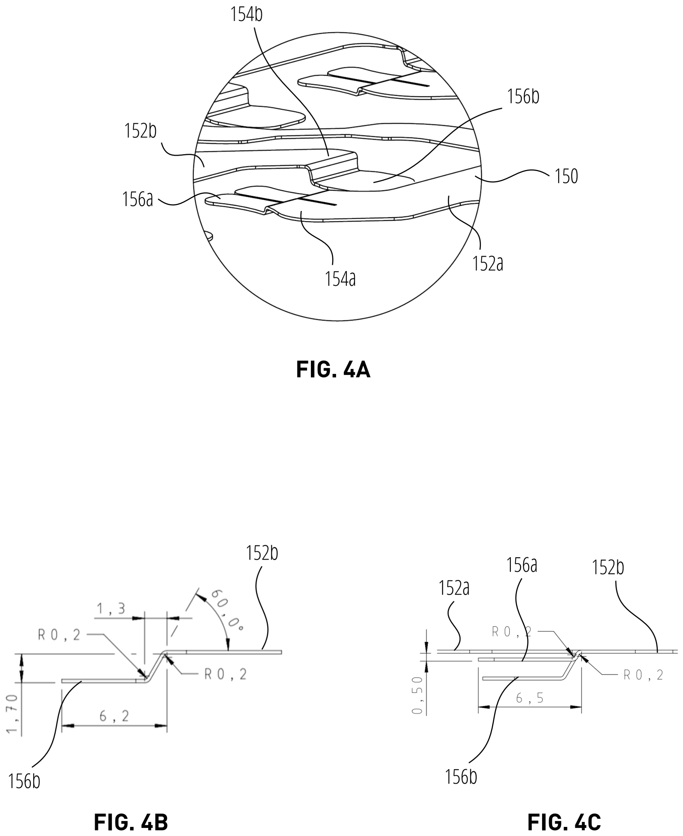

Each of the necks 154a, 154b is configured to be deformable. That is, each neck 154a, 154b is configured to bend in response to pressure on a surface, typically an upper surface, of the corresponding terminal element 156a, 156b during manufacture of the busbar assembly 100, as shown in more detail with reference to FIG. 4A and FIG. 4B.

The neck 154b has a width, that is a flat width across the sheet. The neck includes a constricted region in which the width is reduced, to allow deformation of the neck 154b. In an example, the width of the neck is 6 millimetres and width of the constricted region is 5 millimetres. By deforming the neck 154b at the constricted region, in use the terminal element 156b projects below the body of the connector portion 150. In this way, each terminal element 156b is disposed to contact cell terminals below the busbar assembly 100 in the electrical cell module.

Each portion of a bifurcated neck 154a has a width, that is a flat width across the sheet, to allow deformation of the neck 154a so that, in use, the terminal element 156a projects below the body connector portion. In this way, each terminal element 156a is disposed to contact cell terminals below the busbar assembly 100 in the electrical cell module. Second terminal elements are arranged to electrically connect to a pair of negative cell terminals. In particular, by providing a bifurcated neck, the terminal elements 156a may independently contact cell terminals of different cells with varying heights in the electrical cell module. Each terminal portion 152a, 152b is independently adaptable to contact cell terminals at varying distances below the first plane of the busbar assembly 100.

Furthermore, as the first terminal elements 156a and the second terminal element terminal elements 156b are configured differently, the first terminal elements 156a and second terminal element terminal elements 156b may independently contact cell terminals of different polarities at different heights on a cell. For example, as shown in FIG. 4C, a second terminal element 156b is deformed so that the terminal element 156b is 1.7 millimetres below the corresponding terminal portion 152b of a connector portion 150. For example, as shown in FIG. 4B, the first terminal element 156a is deformed so that the terminal element 156a is 0.5 millimetres below the corresponding terminal portion 152a of an adjacent connector portion 150.

In this way, and as shown in FIG. 5, the second terminal element 156b contacts the negative cell terminal 192b recessed in the centre of the end portion of the cell 190. The terminal element 156a contacts the positive cell terminal 192a at a raised rim of the same end portion. In use, each terminal portion 152a is electrically connected to the positive cell terminal of four first cells, and a second terminal portion electrically connected to the negative cell terminal of four second cells. Each connector portion 150 is configured to electrically connect in series the positive cell terminals 192b of four first cells 190 to the negative cell terminals 192a of four second cells 190.

Each busbar element 141 includes a plurality of locating apertures 148. Each locating aperture 148 is formed as an opening through the respective busbar element 141, from an upper surface to a lower surface. The locating apertures 148 are distributed along a central transverse axis of the busbar element 141. The locating apertures 148 include a first proportion of locating apertures and a second proportion of locating apertures.

In the busbar assembly 100 each of the first proportion of locating apertures of the series of busbar elements 140 aligns with a corresponding locating apertures 118a, 128a of the first and second insulator sheets 110, 120. The aligned locating apertures together each receive a locating dowel during manufacture of the laminated busbar assembly 100, as is described in more detail below.

In the busbar assembly 100 each of the second proportion of locating apertures of the series of busbar elements 140 aligns with corresponding locating apertures 118b, 128b of the first and second insulator sheets 110, 120. The aligned locating apertures each receive another locating dowel, to improve alignment of the busbar assembly 100 with the cells of the electrical cell module during assembly of the electrical cell module.

Referring again to FIG. 5, the series of busbar elements 140 are spaced apart from one another within the busbar assembly 100. Each busbar element 141 is circumscribed by an element perimeter. The series of busbar elements 140 are arranged so that adjacent busbar elements are spaced apart with a minimum element spacing distance 149 between the corresponding element perimeters. In the example, the minimum element spacing distance is at least 2 millimetres. The minimum element spacing distance 149 provides an interstitial space between the first insulator sheet and the second insulator sheet for adhesive material to bridge across during lamination.

The series of busbar elements 140 includes a pair of outer busbar element 142. The pair of outer busbar elements 142 are provided at opposing extremities of the series of busbar elements 140 in the longitudinal direction 101. Each outer busbar element 142 forms a module terminal for the electrical cell module when the busbar assembly 100 is mounted to the cells of the electrical cell module. In this way electrical charge may be conveniently discharged from, or charged to, the cells of electrical cell module by forming an electrical circuit with the outer busbar elements 142.

The outer busbar elements 142 also include connector portions spaced apart from one another in the transverse direction 102. The connector portions each extend from a distal end having a terminal portion, to a proximal end. The proximal end of each connector portion adjoins a common elongate bar. In the example shown, the elongate bar provides a module terminal of the electrical cell module. The distal ends of the connector portions have a respective terminal portion, substantially like first terminal portion 152a or a second terminal portion 152b of associated the busbar elements 141.

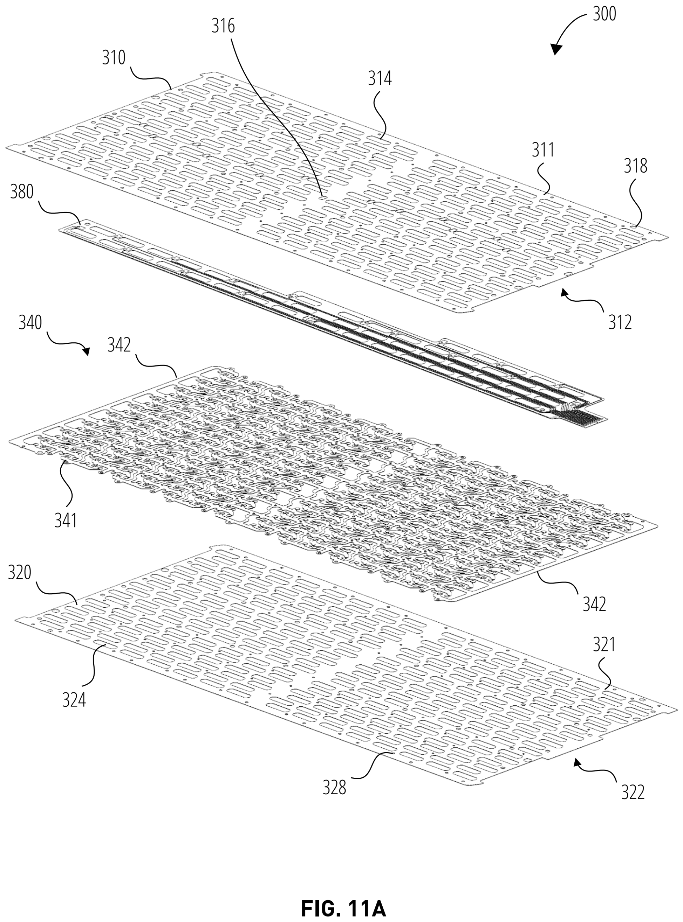

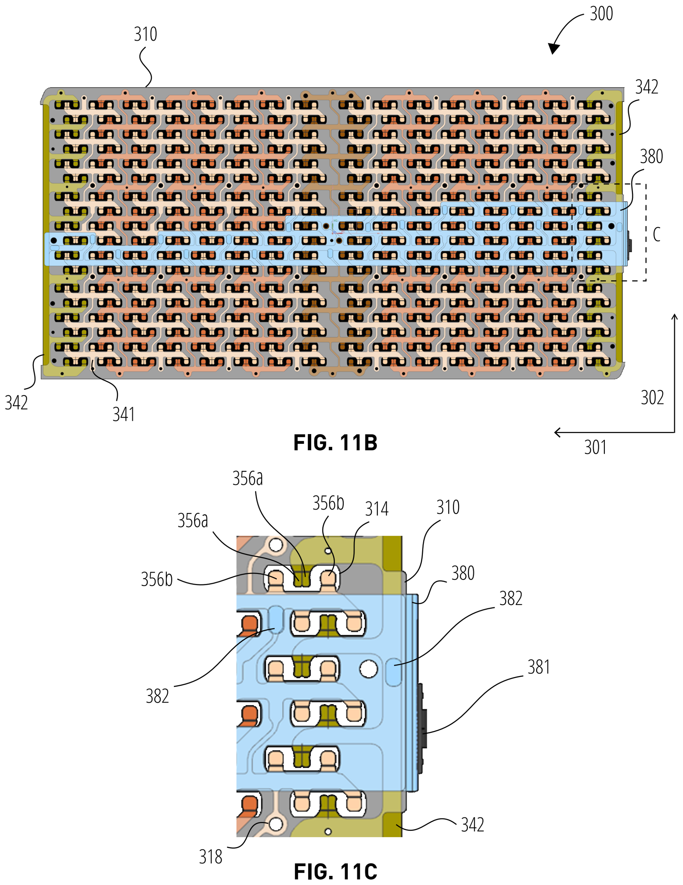

Referring now to FIG. 7, there is shown the steps of a method 700 for manufacturing a laminated busbar assembly for electrically connecting cells of an electrical cell module. The laminated busbar assembly may be the busbar assembly 100 described here with reference to FIG. 1A to FIG. 6, or the busbar assembly 300 described here with reference to FIG. 11A to FIG. 13.

A first step 702 of the method 700 includes providing a first insulator sheet and a second insulator sheet. The first insulator sheet has an first upper surface and an opposing, first lower surface. The second insulator sheet has a second upper surface and an opposing, second lower surface. The first lower surface has a first adhesive layer and the second upper surface has a second adhesive layer.

A second step 704 of the method 700 includes providing a series of busbar elements spaced apart from one another, for example spaced apart from one another in a longitudinal direction. Each busbar element has a plurality of connector portions for contactingly the engaging cells of an electrical cell module to electrically connect the cells in series. The connector portions may be the connector portions 150, 350 as described here, including connector portions arranged so that each adjacent pair of connector portions are spaced apart from one another by a respective intermediary busbar portion 160. Each connector portion may include a first terminal portion and a second terminal portion configured to electrically connect in series a positive cell terminal of at least one first cell to a negative cell terminal of at least one second cell. Each busbar element is circumscribed by an element perimeter.

A third step 706 of the method 700 includes arranging the first insulator sheet in a mould. The first insulator sheet is arranged so that the first upper surface is in contact with the mould. The first adhesive layer on the first lower surface faces out of the mould. The first insulator sheet may be arranged in a first part of a two-part mould so that the first adhesive layer faces away from the first part.

A fourth step 708 of the method 700 includes arranging the series of busbar elements in contact with the first adhesive layer of the first insulator sheet in the mould. The busbar elements of the series are arranged so that adjacent busbar elements are spaced apart with a minimum element spacing distance between the corresponding element perimeters. The minimum element spacing distance is 2 millimetres. That is the busbar elements are arranged no closer than a minimum element spacing distance of 2 millimetres.

A fifth step 710 of the method 700 includes arranging the second insulator sheet in the mould with its second adhesive layer in contact with the series of busbar elements. In this way, the series of busbar elements rest within the mould in contact with, and sandwiched between, the first adhesive layer and the second adhesive layer. The busbar elements are also sandwiched between the first insulator sheet and the second insulator sheet. In this sandwich arrangement, the first insulator sheet, the second insulator sheet and the series of busbar elements to delineate a number of interstitial spaces. The interstitial spaces are formed between the first adhesive layer, the second adhesive layer and the corresponding element perimeters of adjacent busbar elements.

A sixth step 712 of the method 700 includes clamping the mould, for example by securing the counterpart of the two-part mould to the first part. With the mould clamped, heat and pressure are applied to the mould so that the series of busbar elements is laminated between the first insulator sheet and the second insulator sheet. In applying heat and pressure within the mould, the adhesive material of one or both of the first adhesive layer and the second adhesive layer is urged into each interstitial space and forms an adhesive bond layer within each interstitial space. That is, adhesive material is mobilised, for example by softening and flowing into the interstitial space, to bridge between the first adhesive layer and the second adhesive layer. In this way, adhesive material surrounds the element perimeter of each busbar element, increasing the bond strength of the laminate structure. A more resilient laminated busbar assembly is provided.

An example of the arrangement provided by the fifth step 710 is shown particularly in FIG. 9. The busbar element 141 is shown sandwiched between the first insulator sheet 110 and the second insulator sheet 120 so that the respective adhesive layers are in contact with the busbar element 141. Interstitial spaces 199 are formed at the element perimeter of the busbar element 141. Thus, in carrying out the sixth step, adhesive material from either or both of the adhesive layers 119, 129 are urged into the interstitial spaces 199 to form a bond.

As will be realised, the minimum element spacing distance may be varied. In particular, the minimum element spacing distance may be varied according to the thickness of the busbar elements. Stated differently, the minimum element spacing distance may be adapted according to the height of the interstitial space as provided by the thickness of the busbar elements. For a minimum element spacing distance of 2 millimetres, the busbar elements may be formed of sheets of the order of 0.2 millimetres thick, for example in a range of from 0.1 to 0.3 millimetres thick. For a minimum element spacing distance of 4 millimetres, the busbar elements may be formed of sheets of the order of 0.5 millimetres thick, for example in a range of from 0.5 to 1.0 millimetres thick.

As described above, particularly with reference to FIG. 1C, the method 700 of forming the busbar assembly also includes using locating apertures.

The first insulator sheet may be provided with a plurality of first locating apertures through the first upper surface to the first lower surface. In the third step 706, arranging the first insulator sheet in the mould also includes locating at least a proportion of the first locating apertures on dowels fixed in the mould. One, or each, busbar element may be provided with at least one third locating aperture.

Accordingly, in the fourth step 708, arranging the busbar elements in the mould also includes locating at least a proportion of the first locating apertures on the dowels. In this way the first locating apertures are aligned with the third locating apertures.

The second insulator sheet may be provided with a plurality of second locating apertures through the second upper surface to the second lower surface. In the fifth step 710, arranging the second insulator sheet in the mould also includes locating at least a proportion of the second locating apertures on the dowels. In this way, each third locating aperture is aligned between one of the first locating apertures and one of the second locating apertures.

Accordingly, the first insulator sheet, second insulator sheet and the series of busbar elements are laterally fixed by the clamping the mould. The lateral position of the busbar elements within the laminated structure is more effectively controlled during application of heat and pressure, ensuring the correct alignment between the laminated layers and their respective features.

The method 700 may optionally include further steps, for example to secure a sensor layer within the busbar assembly, as is described in more detail below, with reference to FIG. 10 to FIG. 13.

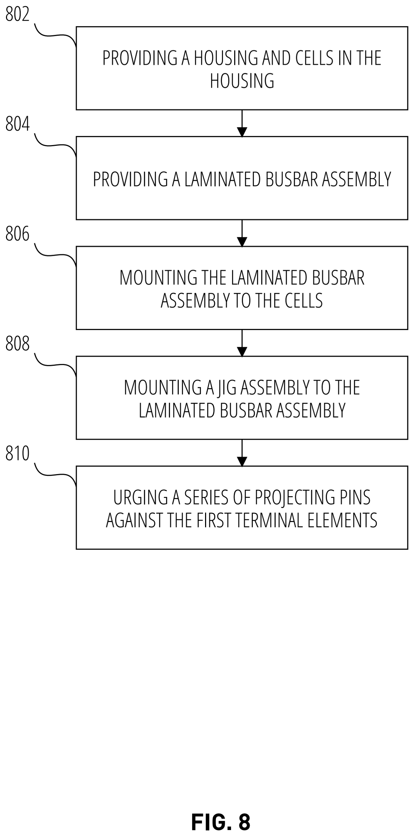

Referring now to FIG. 8, there is shown the steps of a method 800 of manufacturing an electrical cell module. The method 800 includes operably connecting a laminated busbar assembly to the cells of the electrical cell module for discharging electrical energy stored in the cells.

A first step 802 of the method 800 includes providing a housing and a plurality of cells in the housing. The housing is a support for the cells to enable the cells to be mounted for use, for example by attaching the housing to the body of an electric vehicle that will be driven by the electrical energy of the cells.

A second step 804 of the method 800 includes providing a laminated busbar assembly. The laminated busbar assembly may be the busbar assembly 100 described here with reference to FIG. 1A to FIG. 6, or the busbar assembly 300 described here with reference to FIG. 11A to FIG. 13.

The laminated busbar assembly therefore includes a series of busbar elements, each having connector portions spaced apart by respective intermediary busbar portions as described here. Each connector portion of this plurality of connector portions extends between a first terminal portion, having at least one first terminal element, and a second terminal portion, having at least one second terminal element. The first insulator sheet includes a first upper surface, an opposing, first lower surface, and a plurality of first terminal apertures through the first upper surface to the first lower surface. The second insulator sheet includes a second upper surface, an opposing, first lower surface, and a plurality of second terminal apertures through the second upper surface to the second lower surface.

The laminated busbar assembly is arranged and formed so that each first terminal aperture at least partly overlies the second terminal aperture so as to form a plurality of through-openings from the first upper surface to the second lower surface. Each first terminal element of the plurality of connector portions is disposed within a through-opening. In this way, the laminated busbar assembly is in an undeformed configuration. Each of the first terminal elements are co-planar with the bodies of the connector portions. Each of the first terminal elements extend in parallel to the first plane of the laminated busbar assembly.

A third step 806 of the method 800 includes mounting the second lower surface of the laminated busbar assembly to the cells in the housing. That is, the laminated busbar assembly is mounted to the cells in housing so that the second lower surface is oriented towards the cells. In particular, when mounted to the cells, each first terminal element of the laminated busbar assembly is aligned with a cell terminal of a corresponding cell. Typically, the first cell terminal is a negative cell terminal provided at an outer rim of the cell end portion.

With laminated busbar assembly mounted to the cells, the cell terminal sits below the plane of the corresponding terminal element. The cell terminal and corresponding terminal element are vertically spaced apart.

In an example, locating apertures may be provided on the laminated busbar assembly to aid alignment with the cells in the housing. As shown in the FIG. 6, the one, or each, locating aperture 148 may be receive a dowel 196 associated with a frame 194 in the housing. Accordingly, the frame 194 may be a frame fixed around the bodies of the cells to securely hold and space apart the cells within the housing. In this way, the lateral position of the undeformed terminal elements relative to the corresponding cell terminals is more effectively controlled, ensuring the correct alignment.

A fourth step 708 of the method 800 includes mounting a jig assembly to the first upper surface of the laminated busbar assembly. The jig assembly includes a series of projecting pins. The projecting pins are each aligned with a first terminal element of the laminated busbar assembly mounted to the cells.

A fifth step 810 of the method 800 includes urging a first sub-series of the series of projecting pins against the first terminal elements to deform each first terminal element through the respective through-opening to abut a respective cell terminal of the cells of the electrical cell module. In an example, the first sub-series of projecting pins are urged in a direction perpendicular to the first plane of the laminated busbar assembly.

In this way, the jig assembly deforms each first terminal element from their undeformed configuration, for example as shown in FIG. 3, to a deformed configuration, for example as described with reference to FIG. 4A to FIG. 4C, in which each of the first terminal element is contactingly engaged with a first cell terminal below the first plane of the laminated busbar assembly. In use, the terminal portion, and thereby the corresponding connector portion, associated with the deformed first terminal element is electrically connected to the first cell terminal.

Each projecting pin of the first sub-series may be provided on a spring mounted to the jig assembly so that each pin is urged towards each first terminal element using a controlled urging force. In the example shown in FIG. 1A to FIG. 3, the urging force is 25 Newton with a 1 millimetre spring deflection. The projecting pins may deform each pin according to the vertical distance to reach the corresponding first cell terminal, such that all the first terminal elements make contact with cell terminals even allowing for tolerances in the vertical height of the cell terminals. The risk of manufacturing defects is reduced.

Optionally, method 800 may also include additional steps of providing connector portions and terminal portions including second terminal elements. Each second terminal element is disposed within a through-opening, for example a through-opening that includes a first terminal element. With the laminated busbar assembly in an undeformed configuration, each of the second terminal elements are co-planar with the other features of the busbar elements. Each of the second terminal elements extend in parallel to the first plane of the laminated busbar assembly. Furthermore, as the jig assembly is mounted to the laminated busbar assembly, a second sub-series of projecting pins may be aligned with the second terminal elements.

The second sub-series of projecting pins may be substantially the same as the first sub-series. Accordingly, the second sub-series of projecting pins may be urged against the second terminal elements to abut a respective cell terminal of the cells of the electrical cell module. The second sub-series of projecting pins may deform the second terminal elements through the respective through-openings to abut the cell terminal.

In the example shown in FIG. 4A to FIG. 4C, the first terminal elements and the second terminal elements are deformed by different amounts. Thus, as shown in FIG. 5, first terminal elements engage cell terminals at a different nominal vertical height to the cell terminals engaged by the second terminal elements. Each set of terminal elements makes contact with the correct first cell terminal or second cell terminal. The risk of short circuits through incorrect connections is reduced.

Optionally, the fifth step 810 may also include using the projecting pins to weld the terminal elements of the plurality of connector portions to the respective cell terminal. That is, the first sub-series of projecting pins may weld the first terminal elements to the first cell terminals and / or the second sub-series of projecting pins may weld the second terminal elements to the second cell terminals. As each terminal element is adaptable to tolerances in the vertical height of the cell terminals, the method provides reliable means to securely fix both the first terminal elements and the second terminal elements to respective cell terminals, further reducing the risk of defects and increasing the robustness of the electrical contact.

Referring to FIG. 10 to FIG. 13, there is shown another example busbar assembly 300 according to an aspect. The busbar assembly 300 is substantially the same as the busbar assembly 100 described with reference to FIG. 1A to FIG. 5 other than a sensor layer is provided in the busbar assembly 300. Where the features of the busbar assembly 300 are the same as the example of FIG. 1A to FIG. 5, the reference numbers are also kept the same, but with a "3" as the initial digit.

The busbar assembly 300 includes a first insulator sheet 310, a second insulator sheet 320 arranged in parallel to the first insulator sheet 310, and a series of busbar elements 340 laminated between the first insulator sheet 310 and the second insulator sheet 320. The first insulator sheet 310, second insulator sheet 320 and series of busbar elements 340 are shown in an exploded view, that is prior to lamination, particularly in FIG. 11A.

The first insulator sheet 310 and second insulator sheet 320 are substantially the same as the first insulator sheet 110 and second insulator sheet 120 of the first example, including corresponding terminal apertures 314, 324, sensor apertures 316 and locating apertures 318, 328.

In the example, the first insulator sheet 310 includes a dielectric layer 330a provided with an adhesive layer 319 on its first lower surface 312, as shown in FIG. 10. The second insulator sheet 320 includes a dielectric layer 330d provided with an adhesive layer 329 on its second upper surface 321. In this way, the first insulator sheet 310 and second insulator sheet 320 form a laminated arrangement around each busbar element 341 of the series of busbar elements 340.

The busbar assembly 300 also includes a sensor layer 380. The sensor layer 380 is arranged parallel to the first insulator sheet 310 and positioned for lamination between the first insulator sheet 310 and the series of busbar elements 340. The sensor layer 380 includes a plurality of sensor contacts 382, arranged within the sensor layer 380 so that each sensor contact 382 of the plurality of sensor contacts is laminated to a respective busbar element 341. The sensor contact 382 may be configured to detect at least one of: the voltage of the busbar element 341, the electrical current flowing across the busbar element 341, or the temperature of the busbar element 341. Each sensor contact 382 may be electrically connected to a controller to monitor at least one of the voltage, current or temperature, to determine if the electrical cell module to which the busbar assembly 300 is mounted develops a fault.

Each sensor contact 382 is electrically connected to a data port via to a corresponding wire element 384. The sensor layer 380 is configured so that each wire element 384 is aligned in parallel in the longitudinal direction 301 of the busbar assembly 300. Each wire element 384 has a unique length to enable each sensor layer 380 to reach to a unique busbar element 341. Each wire element 384 is spaced apart from its adjacent wire elements 384 by a wire spacing distance. The wire spacing distance is dependent upon a maximum fault current of the busbar element 341 to which the sensor contact 382 contacts. In the example, the wire spacing distance is 1.3 millimetres.

The sensor layer 380 includes a data port 381. The data port 381 is provided at an end region of the sensor layer 380. In this way, the data port 381 is disposed proximal to the outer busbar element 342 so that, with the busbar assembly 300 mounted in an electrical cell module, the data port 381 is at proximal to the electrical cell module housing.

Referring again to FIG. 10, in the example, the sensor layer 380 includes a plurality of sensor contacts 382 arranged between a pair of dielectric layers 330b, 330c. A sensor adhesive layer 389 is provided on both the upper surfaces and the lower surfaces of each dielectric layer 330b, 330c so that the sensor contact 382 is insulated from the busbar elements 341. The sensor layer 380 dielectric layers 330b, 330c permit the sensor layer 380 to be pre-formed as a laminated structure prior to assembly with the busbar assembly 300. In this way, the sensor layer 380 may be conveniently secured to the busbar elements while reducing assembly time.

The series of busbar elements 340 is substantially the same as the series of busbar elements 140 of the first example other than each busbar element 341 includes a mount region 364. So, the series of busbar elements 340 includes a pair of outer busbar elements 342 at opposing extremities of the series of busbar elements 340 in the longitudinal direction 301. The series of busbar elements 340 also includes a plurality of busbar elements 341 spaced apart in the longitudinal direction 301. Each busbar element 341 includes a plurality of connector portions 350 and intermediary busbar portions 360, arranged so that each adjacent pair of connector portions 350 are spaced apart from one another by a respective intermediary busbar portion 360.

Each intermediary busbar portion 360 includes a fusible portion 362 substantially the same as the fusible portion 162 described with respect to FIG. 1A to FIG. 6.

Each connector portion 350 is configured to electrically connect in series a positive cell terminal 392b of at least one first cell to a negative cell terminal 392b of at least one second cell. The intermediary busbar portions 360 of each busbar element 341 are configured to electrically connect in parallel each positive cell terminal 392b of the at least one first cells 390, and to electrically connect in parallel each negative cell terminal 392a of the at least one second cells 390.

The terminal element 356a, 356b are configured substantially the same as those in the example described with reference to FIG. 1A to FIG. 6, including corresponding necks 354a, 354b formed as either a bifurcated neck or with an elongate slot. The terminal elements 356a, 356b are arranged similarly around the respective terminal portions 352a, 352b and interdigitated in a space efficient manner to connect to cells.

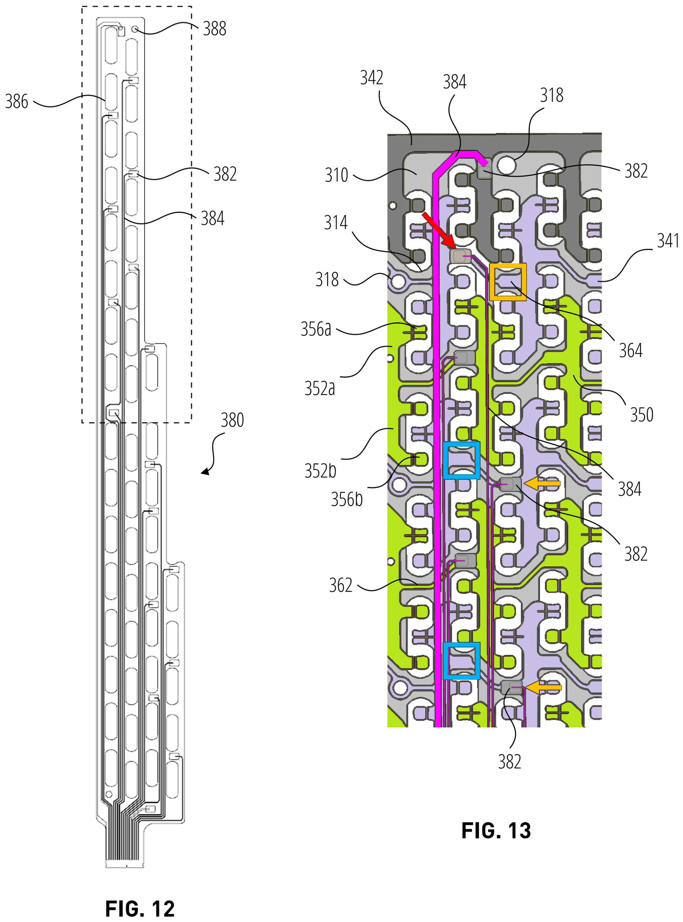

Referring additionally to FIG. 13, each busbar element 341 also includes a mount region 364. Each connector portion 350 of a busbar element 341 includes a body portion disposed, in the longitudinal direction 301, between the first terminal portion 352a and the second terminal portion 352b. The position of the mount region 364 on the busbar element 341 corresponds in the longitudinal direction 301 and transverse direction 302 to a position of a sensor aperture 316 in the first insulator sheet 310. That is, when laminated together, the mount region 364 is positioned to be exposed through one of the plurality of sensor apertures 316 in the first insulator sheet 310. Each sensor contact 382 is accessible through the first insulator sheet 310 in the busbar assembly 300 and may be welded to the corresponding mount region 364 by urging a welding tip against the sensor contact 382 through the sensor aperture 316.

The mount region 364 of the connector portion 350 is provided on one of the intermediary busbar portions 360, adjoined to a body portion. In this way, the sensor contact 382 is mounted proximal to the body of the connector portion 350. In this way, the sensor contact 382 is less susceptible to heat generated during normal flow of current along the series electrical pathway from the first terminal portion 352a to the second terminal portion 352b of a connector portion 350.

In the example, to further simplify construction of the busbar elements 341, a mount region 364 is provided on each of the intermediary busbar portion 360 so that the same busbar element is used repeatedly along the longitudinal direction 301 of the 300 while providing a choice of positions in which to attach a sensor contact 382 to each busbar element 341.

Alternatively, if required, the sensor layer 380 could be repositioned in the laminate structure and laminated to the first upper surface 311 of the first insulator sheet 310. A sensor contact 382 would then be attached to a busbar element 341 by inserting the sensor contact 382 within a corresponding sensor aperture 316. In this way, the sensor layer and sensor apertures provide an increased range of options for assembling a busbar assembly.

The busbar assembly 300 may be manufactured using a modification of the method 700 described with reference to FIG. 7.

When providing a first insulator sheet, the first insulator sheet is provided with a plurality of sensor apertures extending through the first insulator sheet from its first upper surface to its first lower surface. In addition, when providing a series of busbar elements, a mount region is provided on an upper surface of each busbar element. Each mount region is arranged to be exposed through one of a plurality of sensor apertures through the first insulator sheet.

The method includes a further step of providing a sensor layer including a plurality of sensor contacts spaced apart from one another in a longitudinal direction. In the example busbar assembly 300 described here, the sensor layer also includes a data port and a series of wire elements so that each sensor contact of the plurality of sensor contacts is electrically connected to the data port via a corresponding wire element of the series of wire elements.

The method also includes a yet further step, of welding each sensor contact of the plurality of sensor contacts to a respective busbar element of the series of busbar elements.

In the example, the sensor layer is pre-formed so that the sensor contacts are laminated between their own set of insulator sheet. Each of these insulator sheets also includes an adhesive layer on their outer layer so that, during the step of clamping the mould and applying heat and pressure so that the series of busbar elements is laminated between the first insulator sheet and the second insulator sheet, the sensor layer is also laminated to the first upper surface of the first insulator sheet and to the series of busbar elements.

Thus, the method provides a simplified method of manufacturing a busbar assembly including sensor contacts. The sensor layer may be preassembled with sensor contacts provided in predetermined positions that correspond to mount regions on each of the busbar elements. In this way, the method of manufacturing the busbar assembly provides a simple means to correctly position a series of sensor contacts for welding to the busbar elements. The weld processing time is significantly less, and any risk of errors in positioning the sensor contacts is reduced.

The busbar assembly 300 with the sensor layer 380 may be assembled with an electrical cell module using the same method 800 as described here for the first example busbar assembly 100. The locating apertures 318, 328, 348 in the insulator sheets and in the busbar elements 341 provide the same advantageous alignment with one another, and with the cells of the electrical cell module.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A busbar assembly for electrically connecting a series of cells of an electrical cell module, each cell comprising a positive cell terminal and a negative cell terminal at a common end portion of the cell, the busbar assembly comprising:
a first insulator sheet;
a second insulator sheet arranged in parallel to the first insulator sheet; and
at least one busbar element laminated between the first insulator sheet and the second insulator sheet, wherein the, or each, busbar element comprises:
a plurality of connector portions and at least one intermediary busbar portion,
wherein the busbar element is configured so that each adjacent pair of connector portions of the plurality of connector portions are spaced apart from one another by an intermediary busbar portion,
wherein each connector portion is configured to electrically connect in series a positive cell terminal of at least one first cell to a negative cell terminal of at least one second cell;
wherein the intermediary busbar portions of each busbar element are configured to electrically connect in parallel each positive cell terminal of the at least one first cells, and to electrically connect in parallel each negative cell terminal of the at least one second cells;
wherein the busbar element is operably rated for a maximum fault current determined by an aggregation of discharge currents operably provided by each of the negative cell terminals electrically connected to the busbar element; and
wherein each intermediary busbar portion has a fusible portion that is configured to disconnect the adjacent pair of connector portions in response to a surge current through the corresponding intermediary busbar portion, and wherein the surge current is in a range of from 20% to 50% of the maximum fault current.

2. The busbar assembly of claim 1, wherein the or each fusible portion has a cross-sectional area, and wherein the cross-sectional area is in a range of from 0.1 mm² to 0.4 mm².

3. The busbar assembly of claim 1 or 2, wherein the busbar assembly is disposed in parallel to a first plane, wherein the first plane extends in a longitudinal direction, and in a transverse direction perpendicular to the longitudinal direction;
wherein each connector portion extends in the longitudinal direction between: a first terminal portion electrically connected to the positive cell terminal of at least one first cell, and a second terminal portion electrically connected to the negative cell terminal of at least one second cell; and
optionally, wherein each connector portion comprises a body portion disposed, in the longitudinal direction, between the first terminal portion and the second terminal portion, and wherein the or each intermediary busbar portion adjoins the body portion of the associated connector portions.

4. The busbar assembly of claim 3, wherein each of the second terminal portions has at least one second terminal element contactingly engaged below the first plane with a negative cell terminal of a first cell and, optionally, wherein the second insulator sheet comprises:
a second upper surface laminated to the at least one busbar element;
a second lower surface disposed, in use, towards the cells of the electrical cell module; and
a plurality of second terminal apertures through the second upper surface to the second lower surface;
wherein each of the second terminal portions comprises a neck configured to project through a respective second terminal aperture from the connector portion to the negative cell terminal; and
typically, wherein the neck is a bifurcated neck configured to project from the connector portion to a pair of second terminal elements arranged to electrically connect to a pair of negative cell terminals.

5. The busbar assembly of claim 4, wherein each second terminal portion comprises one or both of:
a series of second terminal elements spaced apart in the longitudinal direction; or
a series of second terminal elements spaced apart in the transverse direction.

6. The busbar assembly of any one of claims 2 to 5, wherein each of the first terminal portions has at least one first terminal element contactingly engaged below the first plane with a positive cell terminal of a second cell and, optionally, wherein the second insulator sheet comprises:
a second upper surface laminated to the at least one busbar element;
a second lower surface disposed, in use, towards the cells of the electrical cell module; and
a plurality of second terminal apertures through the second upper surface to the second lower surface;
wherein each of the first terminal portions comprises a neck configured to project through a respective second terminal aperture from the connector portion to the first terminal element; and
optionally, wherein the neck includes an elongate slot extending from the first terminal portion to the respective first terminal element.

7. The busbar assembly of claim 6, wherein each first terminal portion comprises one or both of:
a series of first terminal elements spaced apart in the longitudinal direction; or
a series of first terminal elements spaced apart in the transverse direction.

8. The busbar assembly of any one of claims 2 to 7, wherein the at least one busbar element comprises a plurality of busbar elements, spaced apart in the longitudinal direction and, optionally, the busbar assembly, comprises one or more of:
wherein the connector portions of an adjacent pair of busbar elements are configured to electrically connect to the respective opposing cell terminals of a group of common cells so as to provide an electrical pathway between the adjacent pair of busbar elements through the group of common cells;
wherein the connector portions of a first busbar element of each adjacent pair of busbar elements are interdigitated in the transverse direction with the connector portions of a second busbar element of each adjacent pair of busbar elements;
wherein the first terminal elements of a first busbar element of each adjacent pair of busbar elements are interdigitated in the longitudinal direction with the second terminal elements of a second busbar element of each adjacent pair of busbar elements;
wherein the plurality of busbar elements comprises a pair of outer busbar elements arranged, in a longitudinal direction, at opposing ends of the plurality of busbar elements;
wherein the plurality of busbar elements comprises a pair of outer busbar elements and each outer busbar element of the pair of outer busbar elements is electrically connected to a module terminal; or
wherein the plurality of busbar elements comprises a pair of outer busbar elements and wherein one, or both, outer busbar elements is configured to engage a housing of the electrical cell module.

9. A busbar assembly for electrically connecting cells of an electrical cell module comprising a group of first cells and a group of second cells comprising:
a first insulator sheet, comprising a first upper surface, an opposing first lower surface, and a plurality of sensor apertures through the first upper surface to the first lower surface;
a sensor layer, laminated to the first upper surface of the first insulator sheet, wherein the sensor layer comprises a plurality of sensor contacts spaced apart from one another in a longitudinal direction;
a second insulator sheet, comprising a second upper surface and an opposing, second lower surface, wherein the second insulator sheet is arranged in parallel with the first insulator sheet;
at least two busbar elements, spaced apart from one another in the longitudinal direction, and laminated between the first lower surface of the first insulator sheet and the second upper surface of the second insulator sheet, wherein each busbar element comprises:
at least one connector portion configured so that, with the busbar assembly mounted to the electrical cell module so that the second insulator sheet is facing the cells of the electrical cell module, each connector portion of the at least one connector portions electrically connects in series at least one first cell to at least one second cell, and
a mount region, disposed on an upper surface of each busbar element, wherein each mount region is arranged to be exposed through one of the plurality of sensor apertures through the first insulator sheet;
wherein each sensor contact of the plurality of sensor contacts is configured to contact the mount region of a respective busbar element of the plurality of busbar elements through one of the sensor apertures of the first insulator sheet.

10. The busbar assembly of claim 9, comprising at least one of:
an outer busbar element arranged, in a longitudinal direction, at an extremity of the busbar elements, and wherein the data port is mounted to the outer busbar element;
wherein each connector portion comprises a body portion disposed, in the longitudinal direction, between the first terminal portion and the second terminal portion, and wherein each mount region is provided on an intermediary busbar portion adjoined to the body portion; or
wherein at least one sensor adhesive layer is provided between the sensor layer and the first insulator sheet and / or between the sensor layer and the second insulator sheet.

11. The busbar assembly of claim 9, wherein each sensor contact of the plurality of sensor contacts is electrically connected to a data port via to a corresponding wire element, and, optionally:
each wire element is aligned in parallel in the longitudinal direction; and / or
each wire element is spaced apart from its adjacent wire elements by a wire spacing distance, and wherein the wire spacing distance is dependent upon a fault current of the busbar element to which the sensor contacts.

12. A method of manufacturing an electrical cell module, comprising:
providing a housing and a plurality of cells in the housing;
providing a laminated busbar assembly according to claim 1, wherein:
each connector portion extends between a first terminal portion, having at least one first terminal element, and a second terminal portion, having at least one second terminal element;
the first insulator sheet comprises an first upper surface, an opposing, first lower surface, and a plurality of first terminal apertures through the first upper surface to the first lower surface;
the second insulator sheet comprises a second upper surface, an opposing, first lower surface, and a plurality of second terminal apertures through the second upper surface to the second lower surface;
each first terminal aperture at least partly overlies second terminal aperture so as to form a plurality of through-openings from the first upper surface to the second lower surface; and
wherein each first terminal element of the plurality of connector portions is disposed within a through-opening;
mounting the second lower surface of the laminated busbar assembly to the cells in the housing;
mounting a jig assembly comprising a series of projecting pins to the first upper surface; and
urging a first sub-series of the series of projecting pins against the first terminal elements to deform each first terminal element through the respective through-opening to abut a respective cell terminal of one the cells of the electrical cell module.

13. The method of claim 12, further comprising using the first sub-series of projecting pins to weld the first terminal elements of the plurality of connector portions to the respective cell terminal.

14. The method of claim 12 or 13, wherein each second terminal element of the plurality of connector portions is disposed within one of the through-openings and the method comprises a further step of:
urging a second sub-series of the series of projecting pins against the second terminal elements to abut a respective opposing cell terminal of one of the cells of the electrical cell module.

15. The method of claim 14, wherein urging the second sub-series of projecting pins against the second terminal elements also deforms each second terminal element through the respective through-opening and, optionally, using the second sub-series of projecting pins to weld the second terminal elements to the respective opposing cell terminal.
